(19) **Europäisches Patentamt**
**European Patent Office**
**Office européen des brevets**

(11) **EP 3 279 575 A1**

(12) **EUROPEAN PATENT APPLICATION**
published in accordance with Art. 153(4) EPC

(43) Date of publication:
**07.02.2018 Bulletin 2018/06**

(21) Application number: **15887319.0**

(22) Date of filing: **22.12.2015**

(51) Int Cl.:
**F24F 3/06** [(2006.01)] **F24F 11/02** [(0000.00)]
**F25B 41/04** [(2006.01)] **F25B 49/02** [(2006.01)]

(86) International application number:
**PCT/CN2015/098289**

(87) International publication number:
**WO 2016/155369 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 CN 201510151379**

(71) Applicants:
• **GD Midea Heating & Ventilating Equipment Co., Ltd.**
**Foshan Guangdong 528311 (CN)**

• **Midea Group Co., Ltd.**
**Foshan, Guangdong 528311 (CN)**

(72) Inventors:
• **LUO, Bin**
**Foshan**
**Guangdong 528311 (CN)**
• **CHEN, Junwei**
**Foshan**
**Guangdong 528311 (CN)**

(74) Representative: **advotec.**
**Patent- und Rechtsanwälte**
**Widenmayerstrasse 4**
**80538 München (DE)**

(54) **MULTI-ONLINE SYSTEM**

(57) A multi-online system comprises an outdoor unit device (10), a shunt device (30) and multiple indoor unit devices (21, 22, 23, 24). The shunt device (30) comprises a gas-liquid separator (301), a first heat exchange assembly (307A), a first electronic expansion valve (304A), a second heat exchange assembly (307B), a second electronic expansion valve (304B) and a third electronic expansion valve (304C) connected in parallel with the second electronic expansion valve (304B). The shunt device (30) is used for obtaining the flow rate of a refrigerant passing through the first electronic expansion valve (304A), and respectively obtaining the outlet temperature of indoor heat exchanger (211, 221, 231, 241) of each refrigeration indoor unit device (21, 22, 23, 24) and the temperature of a refrigerant flowing into the second heat exchange assembly (307B) to calculate a superheat degree value when the flow rate of the refrigerant passing through the first electronic expansion valve (304A) is larger than a first preset value, and carries out PI control to the second electronic expansion valve (304B) and the third electronic expansion valve (304C). The multi-online system can accurately calculate the superheat degree of the shunt device, realize accurate distribution of the refrigerant in the system, and obtain an optimal simultaneous heating and refrigerating effect thereof.

Fig. 1

EP 3 279 575 A1

## Description

## FIELD

The present disclosure relates to air conditioning technology field, and more particularly, to a multi-split system.

## BACKGROUND

With the continuous development of air conditioning technology and strengthening of people's environment protection consciousness, a heat recovery multi-split system is more and more popular in the market. A two-pipe heat recovery multi-split system is one of the dominant heat recovery multi-split systems on the current market, in which the two-pipe heat recovery multi-split system is able to realize a simultaneous cooling and heating. In order to make both of the cooling and heating indoor units achieve a good efficiency, a superheat degree of the distribution device is a key control point, and this needs a temperature sensor to collect the temperature values of the front and back of the heat exchange assembly in the distribution device to calculate the superheat degree.

In the related art, under a main cooling mode, a direct function of a second electronic expansion valve is to provide a heating indoor unit with a required subcooling degree of the refrigerant, and this usually needs to calculate a superheat degree of the distribution device according to the temperature values of the front and back of itself, and then to adjust the opening of the second electronic expansion valve according to a given target value to meet the requirement for the superheat degree. In addition, such a control method has a limited and insufficient adjustment range, and needs to be improved.

## SUMMARY

The present disclosure aims to solve one of the technical problems at least to some extent. Therefore, an objective of the present disclosure is to provide a multi-split system. Thus, a superheat degree of a distribution device may be accurately calculated, and an accurate distribution of a refrigerant in a system may be realized such that an optimal effect of simultaneous heating and cooling of the multi-split system may be achieved.

To achieve the above objective, a multi-split system is provided in embodiments of the present disclosure, including an outdoor unit, a distribution device, and a plurality of indoor units. The distribution device includes a gas-liquid separator, a first heat exchange assembly, a first electronic expansion valve, a second heat exchange assembly, a second electronic expansion valve, a third electronic expansion valve connected in parallel with the second electronic expansion valve. The distribution device is configured to acquire a flow rate of a refrigerant passing through the first electronic expansion valve. When the flow rate of the refrigerant passing through the first electronic expansion valve is greater than a first preset value, the distribution device is configured to acquire an outlet temperature of an indoor heat exchanger of each cooling indoor unit of the plurality of indoor units and a temperature of the refrigerant flowing into the second heat exchange assembly respectively, and to calculate a value of superheat degree according to the outlet temperature of the indoor heat exchanger of each cooling indoor unit and the temperature of the refrigerant flowing into the second heat exchange assembly, and to perform a PI control over the second electronic expansion valve and the third electronic expansion valve according to the value of superheat degree.

By the multi-split system according to embodiments of the present disclosure, the distribution device acquires a flow rate of the refrigerant passing through the first electronic expansion valve first, and when the flow rate of the refrigerant passing through the first electronic expansion valve is greater than a first preset value, the distribution device acquires an outlet temperature of an indoor heat exchanger of each cooling indoor unit of the plurality of indoor units and a temperature of the refrigerant flowing into the second heat exchange assembly respectively, and calculates a value of superheat degree of the distribution device according to the an outlet temperature of an indoor heat exchanger of each cooling indoor unit and the temperature of the refrigerant flowing into the second heat exchange assembly, and performs a PI control over the second electronic expansion valve and the third electronic expansion valve according to the calculated value of superheat degree. Therefore, the multi-split system according to embodiments of the present disclosure accurately acquires the value of superheat degree of the distribution device by determining the flow rate of the refrigerant passing through the first electronic expansion valve, which avoids an inaccuracy of an acquired value of superheat degree caused by an inaccuracy of the measured temperature in case of a large flow rate or a small flow rate, and thus a failure of real reflection of a control of superheat degree may be prevented such that an accurate distribution of the refrigerant in a system may be realized, and an optimal effect of simultaneous heating and cooling of the multi-split system may be achieved.

According to an embodiment of the present disclosure, when the flow rate of the refrigerant passing through the first electronic expansion valve is less than a second preset value, the distribution device is further configured to acquire a temperature of the refrigerant discharged to the outdoor unit from the first heat exchange assembly, and to calculate the value of superheat degree according to the temperature of the refrigerant flowing into the second heat exchange assembly and the temperature of the refrigerant discharged to the outdoor unit from the first heat exchange assembly, in which the second preset value is less than the first preset value.

According to an embodiment of the present disclosure, the distribution device calculates the value of superheat degree according to following formula:

$$\Delta SH = T2bAverage - Tm2,$$

in which T2bAverage is an average value of the outlet temperature of the indoor heat exchanger of each cooling indoor unit, and Tm2 is the temperature of the refrigerant flowing into the second heat exchange assembly.

According to another embodiment of the present disclosure, the distribution device calculates the value of superheat degree according to following formula:

$$\Delta SH = Tm3 - Tm2,$$

in which Tm3 is the temperature of the refrigerant discharged to the outdoor unit from the first heat exchange assembly, and Tm2 is the temperature of the refrigerant flowing into the second heat exchange assembly.

In embodiments of the present disclosure, the multi-split system works under a main cooling mode.

According to an embodiment of the present disclosure, the outlet temperature of the indoor heat exchanger of each cooling indoor unit is detected by a temperature sensor provided at an outlet of the indoor heat exchanger of each cooling indoor unit, and the temperature of the refrigerant flowing into the second heat exchange assembly is detected by a temperature sensor provided at an outlet of the second electronic expansion valve.

## BRIEF DESCRIPTION OF THE DRAWINGS

Fig. 1 is a schematic view of a multi-split system according to an embodiment of the present disclosure;
Fig. 2 is schematic view of a multi-split system operates under a pure heating mode according to an embodiment of the present disclosure;
Fig. 3 is schematic view of a multi-split system operates under a main heating mode according to an embodiment of the present disclosure;
Fig. 4 is a schematic view of a multi-split system operates under a pure cooling mode according to an embodiment of the present disclosure;
Fig. 5 is a schematic view of a multi-split system operates under a main cooling mode according to an embodiment of the present disclosure; and
Fig. 6 is a communication network diagram of a multi-split system according to an embodiment of the present disclosure.

## DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

Next, a multi-split system according to embodiments of the present disclosure will be described by referring to the accompanying drawings.

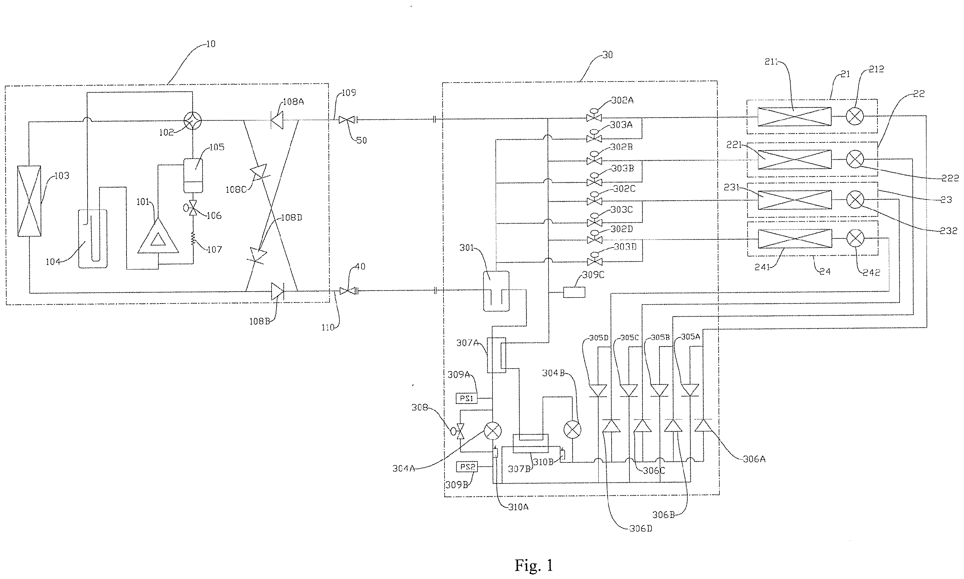

As shown in Fig. 1 to Fig. 5, the multi-split system according to embodiments of the present disclosure includes: an outdoor unit 10, a plurality of indoor units, such as four indoor units 21, 22, 23, 24 and a distribution device 30.

The outdoor unit 10 includes a compressor 101, a four-way valve 102, an outdoor heat exchanger 103, an outdoor gas-liquid separator 104, an oil separator 105, a first electromagnetic valve 106, a capillary 107, four one-way valves 108A, 108B, 108C, 108D, a first interface 109 and a second interface 110. The compressor 101 has an exhaust port and a gas returning port, and the four-way valve 102 has a first valve port to a fourth valve port, in which the first valve port is communicated with one of the second valve port and the third valve port, and the fourth valve port is communicated with the other one of the second valve port and the third valve port, and the first valve port is communicated with the exhaust port of the compressor 101 through the oil separator 105, and the fourth valve port is communicated with the gas returning port of the compressor 101 through the outdoor gas-liquid separator 104, and the one-way valve 108A is connected in series between the second valve port and the first interface 109, and the third valve port is connected to a first end of the outdoor heat exchanger 103.

The distribution device 30 includes a gas-liquid separator 301, a plurality of first controlling valves (such as four first controlling valves 302A, 302B, 302C, 302D), a plurality of second controlling valves (such as four second controlling valves 303A, 303B, 303C, 303D), a first electronic expansion valve 304A, a second electronic expansion valve 304B, a third electronic expansion valve 304C connected in parallel with the second electronic expansion valve 304B, four first one-way valves 305A, 305B, 305C, 305D, four second one-way valves 306A, 306B, 306C, 306D, a first heat exchange assembly 307A and a second heat exchange assembly 307B. The gas-liquid separator 301 has an inlet, a gas outlet and a liquid outlet, the inlet is connected to a second end of the outdoor heat exchanger 103 through a high-pressure stop valve 40 and the one-way valve 108B, the gas outlet is connected to the four second controlling valves 303A, 303B, 303C, 303D respectively; the four first controlling valves 302A, 302B, 302C, 302D are connected to the first interface 109 through the low-pressure stop valve 50 respectively. The first heat exchange assembly 307A and the second heat exchange assembly 307B may be plate heat exchangers, and may also be double-pipe heat exchangers.

As shown in Fig. 1 to Fig. 5, the first end of the one-way valve 108A is connected between the one-way valve 108B and the second interface 110 through the one-way valve 108C, and the second end of the one-way valve 108A is connected between the one-way valve 108B and the outdoor heat exchanger 103 through the one-way valve 108D.

The first heat exchange assembly 307A and the second heat exchange assembly 307B each have a first heat exchange flow path and a second heat exchange flow path, and the liquid outlet of the gas-liquid separator 301 is connected to the first heat exchange flow path of the first heat exchange assembly 307A, and the first heat exchange flow path of the first heat exchange assembly 307A is connected to the first electronic expansion valve 304A, and the second heat exchange flow path of the first heat exchange assembly 307A is connected to the second heat exchange flow path of the second heat exchange assembly 307B and the four first controlling valves 302A, 302B, 302C, 302D respectively.

As shown in Fig. 1 to Fig. 5, each indoor unit includes an indoor heat exchanger and a throttling element. The indoor unit 21 includes an indoor heat exchanger 211 and a throttling element 212, and the indoor unit 22 includes an indoor heat exchanger 221 and a throttling element 222, and the indoor unit 23 includes an indoor heat exchanger 231 and a throttling element 232, and the indoor unit 24 includes an indoor heat exchanger 241 and a throttling element 242. The first end of the indoor heat exchanger in each indoor unit is connected to the corresponding throttling element, the second end of the indoor heat exchanger in each indoor unit is connected to the corresponding first controlling valve and second controlling valve, and the throttling element in each indoor unit is connected to the corresponding first one-way valve and the second one-way valve, and the flow direction of the first one-way valve is opposite to the flow direction of the second one-way valve. Moreover, the four first one-way valves 305A, 305B, 305C, 305D are all connected to a first common flow path, and the four second one-way valves 306A, 306B, 306C, 306D are all connected to a second common flow path, and the first heat exchange flow path of the second heat exchange assembly 307B is communicated with the first common flow path and the second common flow path respectively, and the first electronic expansion valve 304A is connected to the first common flow path, and the second electronic expansion valve 304B is connected to the second heat exchange flow path of the second heat exchange assembly 307B and the second common flow path respectively, and the first electronic expansion valve 304A is further connected with the second electromagnetic valve 308 in parallel.

In embodiments of the present disclosure, the distribution device 30 is configured to acquire a flow rate of the refrigerant passing through the first electronic expansion valve 304A, and when the flow rate of the refrigerant passing through the first electronic expansion valve 304A is greater than the first preset value (i.e., a large flow rate), the distribution device 30 is configured to acquire an outlet temperature of an indoor heat exchanger of each cooling indoor unit in the plurality of indoor units and the temperature of the refrigerant flowing into the second heat exchange assembly respectively, and to calculate a value of superheat degree according to the outlet temperature of the indoor heat exchanger of each cooling indoor unit and the temperature of the refrigerant flowing into the second heat exchange assembly, and to perform a PI control over the second electronic expansion valve and the third electronic expansion valve according to the value of superheat degree.

According to an embodiment of the present disclosure, when the flow rate of the refrigerant passing through the first electronic expansion valve is less than the second preset value (i.e., a small flow rate), the distribution device is further configured to acquire a temperature of the refrigerant discharged to the outdoor unit from the first heat exchange assembly, and to calculate the value of superheat degree according to the temperature of the refrigerant flowing into the second heat exchange assembly and the temperature of the refrigerant discharged to the outdoor unit from the first heat exchange assembly, in which the second preset value is less than the first preset value.

When calculating the value of superheat degree in case of a large flow rate, the distribution device calculates the value of superheat degree according to following formula:

$$\Delta SH = T2bAverage - Tm2,$$

in which T2bAverage is an average value of the outlet temperature of the indoor heat exchanger of each cooling indoor unit, and Tm2 is the temperature of the refrigerant flowing into the second heat exchange assembly.

When calculating the value of superheat degree in case of a small flow rate, the distribution device calculates the value of superheat degree according to following formula:

$$\Delta SH = Tm3 - Tm2,$$

in which Tm3 is the temperature of the refrigerant discharged to the outdoor unit from the first heat exchange assembly, and Tm2 is the temperature of the refrigerant flowing into the second heat exchange assembly.

Therefore, the multi-split system according to embodiments of the present disclosure may accurately acquire the value of superheat degree of the distribution device by determining the flow rate of the refrigerant passing through the first electronic expansion valve, which avoids an inaccuracy of the acquired value of superheat degree caused by an inaccuracy of the measured temperature in case of a large flow rate or a small flow rate, and thus a failure of real reflection of the control of the superheat degree is prevented such that an accurate distribution of the refrigerant in the system may be realized.

According to an embodiment of the present disclosure, as shown in Fig. 1 to Fig. 5, a pressure sensor 309A and a pressure sensor 309B are provided at two ends of the first electronic expansion valve 304A and the second electromagnetic valve 308 in parallel connection respectively, and a temperature sensor 310A and a temperature sensor 310B are provided at two ends of the first heat exchange flow path of the second heat exchange assembly 307B respectively. In addition, a pressure sensor 309C is provided at one end of the second heat exchange flow path of the first heat exchange assembly 307A.

Moreover, the outlet temperature of the indoor heat exchanger of each cooling indoor unit is detected by a temperature sensor provided at an outlet of the indoor heat exchanger of each cooling indoor unit, and the temperature of the refrigerant flowing into the second heat exchange assembly is detected by a temperature sensor provided at an outlet of the second electronic expansion valve.

In embodiments of the present disclosure, the multi-split system controls a superheat degree when working under a main cooling mode. It should be noted that, the operation mode of the multi-split system further includes a pure cooling mode, a pure heating mode and a main heating mode.

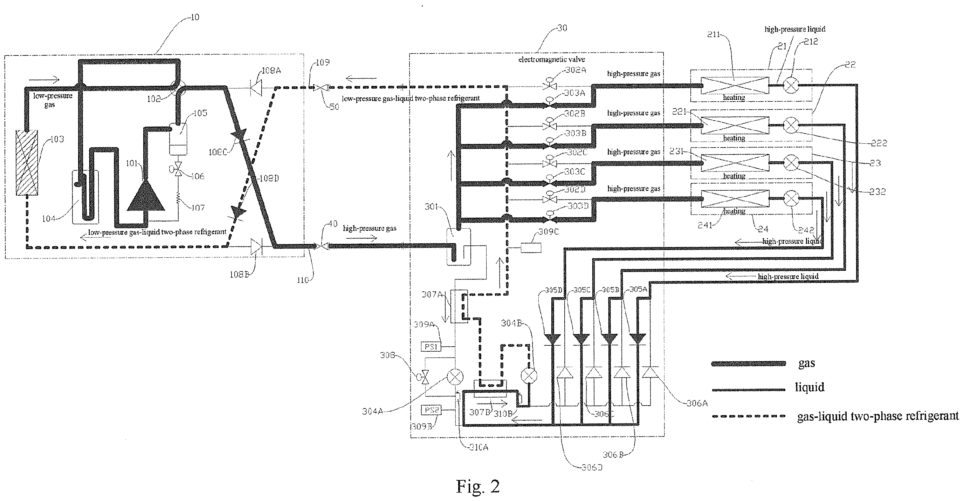

Next, flow directions of refrigerants when the multi-split system works under a pure heating mode, a main heating mode, a pure cooling mode and a main cooling mode will be described respectively by referring to Fig. 2 to Fig. 5.

As shown in Fig. 2, when the outdoor unit 10 determines that the multi-split system works under a pure heating mode, the four indoor units perform heating work. The flow direction of a refrigerant will be described as follows: a high-pressure gas flows into the four-way valve 102 through the oil separator 105 from the exhaust port of the compressor 101, then flows into the gas-liquid separator 301 via the one-way valve 108C, the second interface 110 and the high-pressure stop valve 40, and the high-pressure gas flows into the corresponding four indoor heat exchangers via the four second controlling valves 303A, 303B, 303C, 303D respectively from the gas outlet of the gas-liquid separator 301, and then turns into a high-pressure liquid; then, the four-way high-pressure liquid flows into the first heat exchange flow path of the second heat exchange assembly 307B via the corresponding throttling elements and the four first one-way valves 305A, 305B, 305C, 305D, and turns into a low-pressure gas-liquid two-phase refrigerant via the second electronic expansion valve 304B; the low-pressure gas-liquid two-phase refrigerant flows back to the outdoor unit 10 via the second heat exchange flow path of the second heat exchange assembly 307B and the second heat exchange flow path of the first heat exchange assembly 307A, that is, the low-pressure gas-liquid two-phase refrigerant turns into a low-pressure gas after flowing back to the outdoor heat exchanger 103 via the low-pressure stop valve 50, the first interface 109 and the one-way valve 108D, and the low-pressure gas flows back to the gas returning port of the compressor 101 via the four-way valve 102 and the outdoor gas-liquid separator 104.

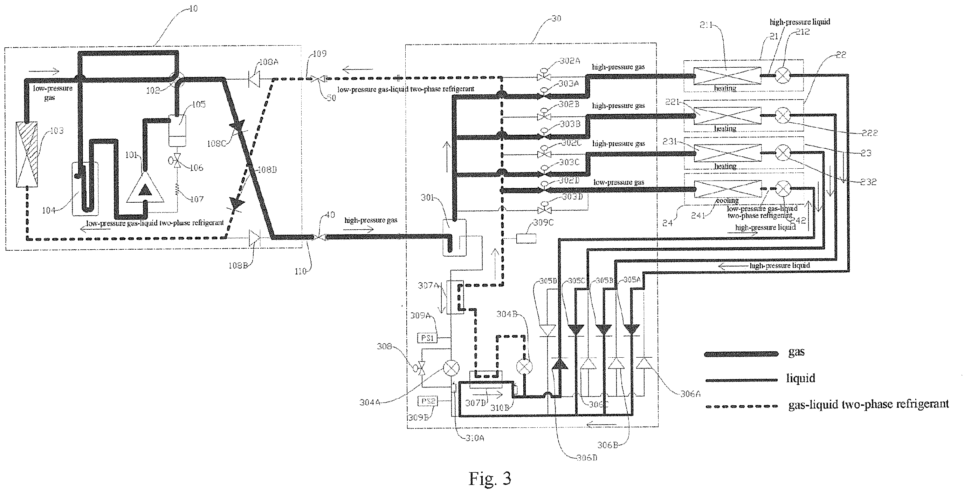

As shown in Fig. 3, when the outdoor unit 10 determines that the multi-split system works under a main heating mode, three of the four indoor units perform heating work, and one indoor unit performs cooling work. The flow direction of a refrigerant for heating will be described as follows: a high-pressure gas flows into the four-way valve 102 through the oil separator 105 from the exhaust port of the compressor 101, then flows into the gas-liquid separator 301 via the one-way valve 108C, the second interface 110 and the high-pressure stop valve 40, and the high-pressure gas flows into the indoor heat exchangers in the corresponding three heating indoor units via the three second controlling valves 303A, 303B, 303C respectively from the gas outlet of the gas-liquid separator 301, then turns into a high-pressure liquid, and then the three-way high-pressure liquid flows into the first heat exchange flow path of the second heat exchange assembly 307B via the corresponding throttling elements and the three first one-way valves 305A, 305B, 305C, and turns into a low-pressure gas-liquid two-phase refrigerant via the second electronic expansion valve 304B, and the low-pressure gas-liquid two-phase refrigerant flows back to the outdoor unit 10 via the second heat exchange flow path of the second heat exchange assembly 307B and the second heat exchange flow path of the first heat exchange assembly 307A, that is, the low-pressure gas-liquid two-phase refrigerant turns into a low-pressure gas after flowing back to the outdoor heat exchanger 103 via the low-pressure stop valve 50, the first interface 109 and the one-way valve 108D, and the low-pressure gas flows back to the gas returning port of the compressor 101 via the four-way valve 102 and the outdoor gas-liquid separator 104. The flow direction of a refrigerant for cooling will be described as follows: a part of the high-pressure liquid flowing through the first heat exchange flow path of the second heat exchange assembly 307B further turns into a low-pressure gas-liquid two-phase refrigerant after flowing into the throttling element 242 in the indoor unit 24 via the second one-way valve 306D, then turns into a low-pressure gas via the indoor heat exchanger 241 in the indoor unit 24; after flowing through the first controlling valve 302D, the low-pressure gas flows back to the outdoor unit 10 after being mixed with the low-pressure gas-liquid two-phase refrigerant flowing through the second heat exchange flow path of the second heat exchange assembly 307B and the second heat exchange flow path of the first heat exchange assembly 307A.

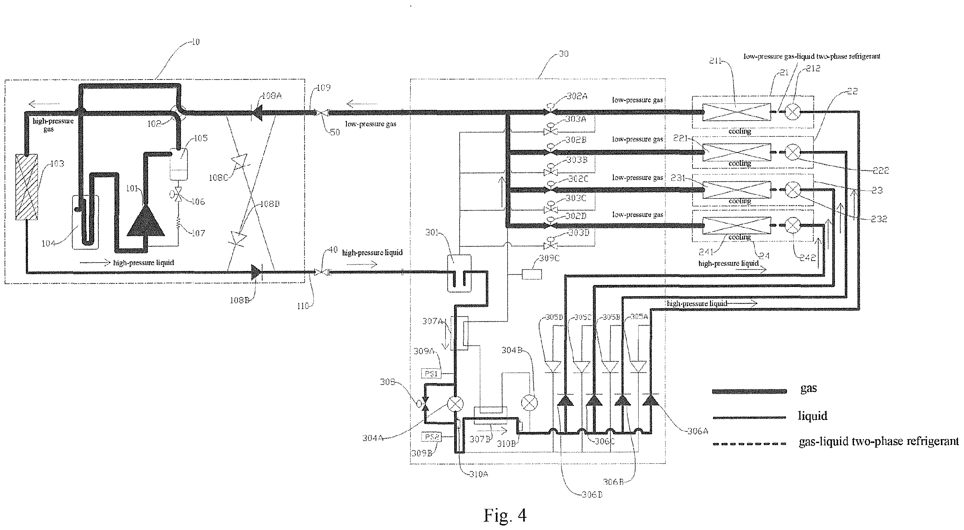

As shown in Fig. 4, when the outdoor unit 10 determines that the multi-split system works under a pure cooling mode, the four indoor units perform cooling work. The flow direction of a refrigerant will be described as follows: a high-pressure gas flows into the four-way valve 102 through the oil separator 105 from the exhaust port of the compressor 101, then turns into a high-pressure liquid after flowing through the outdoor heat exchanger 103, and the high-pressure liquid flows into the gas-liquid separator 301 via the one-way valve 108B, the second interface 110 and the high-pressure stop valve 40, and the high-pressure liquid flows into the first electronic expansion valve 304A and the second electromagnetic valve 308 via the first heat exchange flow path of the first heat exchange assembly 307A from the liquid outlet of the gas-liquid separator 301, then flows into the four second one-way valves 306A, 306B, 306C, 306D respectively via the first heat exchange flow path of the second heat exchange assembly 307B, and the four-way high-pressure liquid flowing through the four second one-way valves 306A, 306B, 306C, 306D turns into a four-way low-pressure gas-liquid two-phase refrigerant after correspondingly flowing through the throttling elements in the four indoor units respectively, and the four-way low-pressure gas-liquid two-phase refrigerant turns into a four-way low-pressure gas after flowing through the corresponding indoor heat exchangers respectively, and then the low-pressure gas flows back to the outdoor unit 10 correspondingly via the four first controlling valves 302A, 302B, 302C, 302D, that is, the low-pressure gas flows back to the gas returning port of the compressor 101 via the low-pressure stop valve 50, the first interface 109, the one-way valve 108A and the outdoor gas-liquid separator 104.

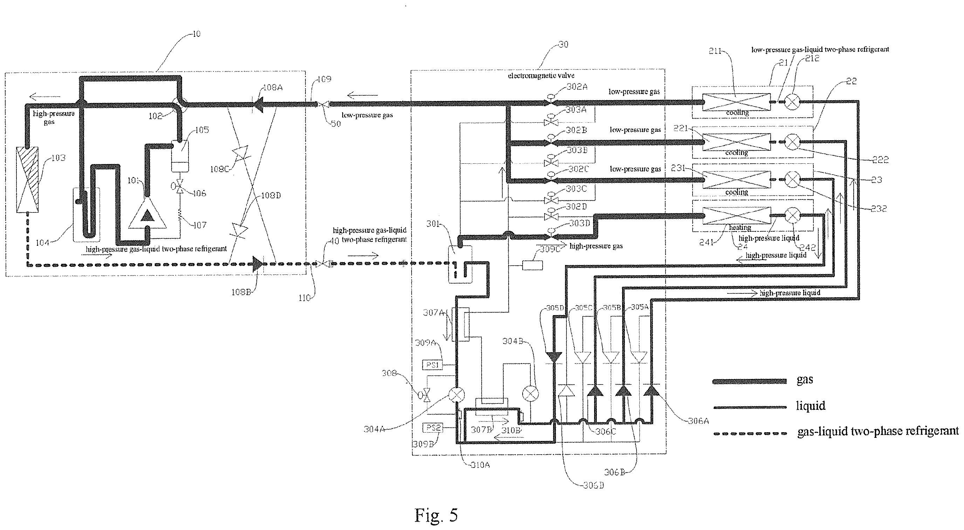

As shown in Fig. 5, when the outdoor unit 10 determines that the multi-split system works under a main cooling mode, three of the four indoor units perform cooling works and one indoor unit performs heating work. The flow direction of a refrigerant for cooling will be described as follows: a high-pressure gas flows into the four-way valve 102 through the oil separator 105 from the exhaust port of the compressor 101, then turns into a high-pressure gas-liquid two-phase refrigerant after flowing through the outdoor heat exchanger 103, and the high-pressure gas-liquid two-phase refrigerant flows into the gas-liquid separator 301 via the one-way valve 108B, the second interface 110 and the high-pressure stop valve 40 to perform a gas-liquid separation, in which the high-pressure liquid flows into the first electronic expansion valve 304A and the second electromagnetic valve 308 via the first heat exchange flow path of the first heat exchange assembly 307A from the liquid outlet of the gas-liquid separator 301, then flows into the three second one-way valves 306A, 306B, 306C via the first heat exchange flow path of the second heat exchange assembly 307B respectively, the three-way high-pressure liquid flowing through the three second one-way valves 306A, 306B, 306C turns into a three-way low-pressure gas-liquid two-phase refrigerant after correspondingly flowing through throttling elements in the three indoor units respectively, and the three-way low-pressure gas-liquid two-phase refrigerant turns into three-way low-pressure gas after flowing through the corresponding indoor heat exchangers respectively, then flows back to the outdoor unit 10 correspondingly via the three first controlling valves 302A, 302B, 302C, that is, the low-pressure gas flows back to the gas returning port of the compressor 101 via the low-pressure stop valve 50, the first interface 109, the one-way valve 108A, and the outdoor gas-liquid separator 104. The flow direction of a refrigerant for heating will be described as follows: a high-pressure gas after the gas-liquid separation through the gas-liquid separator 301 flows into the indoor heat exchanger 241 in the indoor unit 24 via the second controlling valve 303D from the gas outlet of the gas-liquid separator 301, then turns into a high-pressure liquid; and after flowing through the throttling element 242 in the indoor unit 24, the high-pressure liquid joins the high-pressure liquid flowing through the first heat exchange flow path of the second heat exchange assembly 307B via the first one-way valve 305D.

In embodiments of the present disclosure, in order to realize an automatic control of the pressure difference $\Delta P$ between the front and back of the first electronic expansion valve 304A, each indoor unit needs to send an operating parameter of the indoor unit to the distribution device 30, in which the operating parameter of each indoor unit includes: an operating mode of the indoor unit (such as a cooling mode, a heating mode, etc.), a superheat degree when the indoor unit serves as a cooling indoor unit, an opening of the throttling element when the indoor unit serves as a cooling indoor unit, a subcooling degree when the indoor unit serves as a heating indoor unit, an opening of the throttling element when the indoor unit serves as a heating indoor unit, etc.

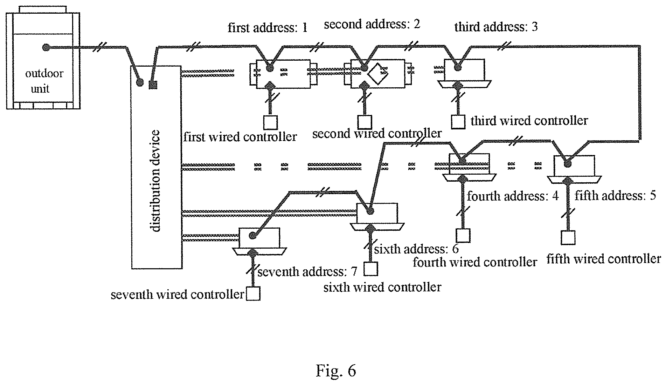

According to an embodiment of the present disclosure, as shown in Fig. 6, the outdoor unit and the distribution device may communicate with each other directly, and each indoor unit communicates with the outdoor unit through the distribution device. Each indoor unit is allocated with an address for convenience for the communications between individual indoor units and communications between each indoor unit and the distribution device, for example, the first indoor unit is allocated with a first address, and the second indoor unit is allocated with a second address, ......, and the seventh indoor unit is allocated with a seventh address. In addition, each indoor unit further includes a wired controller, and each indoor unit further communicates with a respective wired controller.

Further, according to a specific example of the present disclosure, the outdoor controller in the outdoor unit communicates with the control module in the distribution device, meanwhile, the control module in the distribution device communicates with the indoor controllers in each indoor unit. The outdoor controller in the outdoor unit acquires temperature information of the outdoor unit (such as a temperature of the environment in which the outdoor unit is located, an exhausting temperature, a gas returning temperature, a heat exchange temperature, etc.), pressure information (such as an exhausting pressure, a gas returning pressure, etc.) and operating modes of each indoor unit sent by a plurality of indoor units and so on in real time to determine an operating mode of the multi-split system (such as a pure heating mode, a main heating mode, a pure cooling mode and a main cooling mode), and sends the instruction indicating the operating mode of the multi-split system to the distribution device. Meanwhile, the outdoor controller in the outdoor unit further controls the compressor and the outdoor fan, etc. to operate according to the inner logic output instruction signal.

Specifically, after the multi-split system is turned on, the outdoor controller in the outdoor unit acquires environment temperature information, pressure information of the outdoor unit and operating modes of each indoor unit to determine an operating mode of the multi-split system. For example, when each indoor unit operates under a cooling mode, the operating mode of the multi-split system is a pure cooling mode; when each indoor unit operates under a heating mode, the operating mode of the multi-split system is a pure heating mode; when there are both indoor units operating under a cooling mode and indoor units operating under a heating mode in the plurality of indoor units, the operating mode of the multi-split system is a simultaneous cooling and heating mode, and the outdoor unit sends corresponding mode instruction to the distribution device according to the determined operating mode of the system. Meanwhile, the outdoor unit controls the compressor and the outdoor fan, etc. to operate according to the inner logic output instruction signal. The distribution device controls each status parameter according to the mode instruction given by the outdoor unit.

In embodiments of the present disclosure, first, among the plurality of indoor units, a cooling indoor unit performs an individual PID control over its own corresponding throttling element (i.e., the electronic expansion valve) according to the superheat degree of its own, and a heating indoor unit performs an individual PID control over its own corresponding throttling element (i.e., the electronic expansion valve) according to the subcooling degree of itsself, and transmits the relevant parameter to the distribution device. Then, the cooling indoor unit transmits the temperature value (such as the outlet temperature of the indoor heat exchanger of the cooling indoor unit) detected by its own temperature sensor to the distribution device such that the distribution device takes an average value (i.e., T2bAverage) according to the outlet temperature of the indoor heat exchanger of the cooling indoor unit. Then, the distribution device calculates the value of superheat degree of the distribution device according to the different situations as follows:

When the flow rate of the refrigerant passing through the first electronic expansion valve is less than the second preset value (i.e., in case of a small flow rate), the cooling requirement is low, the heat exchange amount of the first heat exchange assembly is small, and the temperature of the refrigerant discharged to the outdoor unit from the first heat exchange assembly is near to the temperature of the refrigerant flowing into the second heat exchange assembly, and the value of superheat degree of the distribution device = the temperature of the refrigerant discharged to the outdoor unit from the first heat exchange assembly - the temperature of the refrigerant flowing into the second heat exchange assembly.

When the flow rate of the refrigerant passing through the first electronic expansion valve is greater than the first preset value (i.e., in case of a big flow rate), the cooling requirement is high, the heat exchange amount of the first heat exchange assembly is big, and the temperature of the refrigerant discharged to the outdoor unit from first heat exchange assembly is much higher than the temperature of the refrigerant flowing into the second heat exchange assembly. At this moment, if the value of superheat degree of the distribution device is calculated using a calculating method in case of a small flow rate to adjust the opening of the second electronic expansion valve and the third electronic expansion valve, the real superheat degree of the distribution device may not be reflected, and the opening of the two electronic expansion valves is bigger and bigger, which leads to a bypass of lots of liquid refrigerant and affects the cooling effect of the cooling indoor unit. However, at this moment, the distribution device may calculate the average temperature (i.e., T2bAverage) according to the outlet temperature of the indoor heat exchanger of the cooling indoor unit transmitted by the cooling indoor unit, and the value of superheat degree of the distribution device = T2bAverage - the temperature of the refrigerant flowing into the second heat exchange assembly, and the opening of the second electronic expansion valve and the third electronic expansion valve is controlled according to the calculated value of superheat degree to make it reach a target superheat degree. At this moment, the control technique of the superheat degree may truly reflect the superheat degree of the system, and thus an influence of an improper control of the superheat degree on the cooling effect of the indoor unit may be avoided.

By the multi-split system according to embodiments of the present disclosure, the distribution device acquires a flow rate of the refrigerant passing through the first electronic expansion valve first, and when the flow rate of the refrigerant passing through the first electronic expansion valve is greater than a first preset value, the distribution device acquires an outlet temperature of an indoor heat exchanger of each cooling indoor unit of the plurality of indoor units and a temperature of the refrigerant flowing into the second heat exchange assembly respectively, and calculates a value of superheat degree of the distribution device according to the an outlet temperature of an indoor heat exchanger of each cooling indoor unit and the temperature of the refrigerant flowing into the second heat exchange assembly, and performs a PI control over the second electronic expansion valve and the third electronic expansion valve according to the calculated value of superheat degree. Therefore, the multi-split system according to embodiments of the present disclosure accurately acquires the value of superheat degree of the distribution device by determining the flow rate of the refrigerant passing through the first electronic expansion valve, which avoids an inaccuracy of an acquired value of superheat degree caused by an inaccuracy of the measured temperature in case of a large flow rate or a small flow rate, and thus a failure of real reflection of a control of superheat degree may be prevented such that an accurate distribution of the refrigerant in a system may be realized, and an optimal effect of simultaneous heating and cooling of the multi-split system may be achieved.

In descriptions of the present disclosure, it is understood that, the direction or position relationships, which are defined by terms such as "center", "longitudinal", "lateral", "length", "width", "thickness", "up", "down", "front", "rear", "left", "right", "vertical", "horizontal", "top", "bottom", "inside", "outside", "clockwise", "counterclockwise", "axial", "radial", "circumferential", etc., are based on direction or position relationships shown in the figures. They are only used for convenience of describing the present disclosure and simplifying the descriptions and are not intended to indicate or imply specific directions, specific structures and operations which the device or the element must have. Therefore, they cannot be understood as a limitation to the present disclosure.

In addition, terms such as "first" and "second" are used herein for purposes of description and are not intended to indicate or imply relative importance or significance or imply a number of technical features indicated. Therefore, a "first" or "second" feature may explicitly or implicitly include one or more features. Further, in the description, unless indicated otherwise, "a number of" refers to two or more.

In the present disclosure, unless indicated otherwise, terms such as "install", "connect", "couple", "fix", etc., should be understood broadly. For example, it can be a fixed connection, it also can be a detachable connection or an integration. It can be a mechanical connection, or can be an electrical connection. It can be a direct connection and also can be an indirect connection through an intermediate media. It can be a connection inside two elements or mutual relationships of two elements, unless indicated otherwise. For those skilled in the art, specific meaning of the above terms in the present disclosure can be understood according to specific situations.

In the present disclosure, unless indicated otherwise, a first feature "on" or "under" a second feature may include an embodiment in which the first feature directly contacts the second feature, and may also include an embodiment in which an additional feature is formed between the first feature and the second feature so that the first feature does not directly contact the second feature. Furthermore, a first feature "on," "above," or "on top of' a second feature may include an embodiment in which the first feature is right or obliquely "on," "above," or "on top of" the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

Reference throughout this specification, terms "an embodiment", "some embodiments", "one embodiment", "an example", "a specific example", or "some examples" means that a particular feature, structure, material, or characteristic described in connection with the embodiment or example is included in at least one embodiment or example of the disclosure. In the descriptions, expressions of the above terms does not need for same embodiments or examples. Furthermore, the feature, structure, material, or characteristic described can be incorporated in a proper way in any one or more embodiments or examples. In addition, under non-conflicting condition, those skilled in the art can incorporate or combine features described in different embodiments or examples.

Although explanatory embodiments have been shown and described, it would be appreciated by those skilled in the art that the above embodiments are exemplary, shall not be construed to limit the present disclosure, and changes, alternatives, and modifications may be made in the embodiments within the scope of the present disclosure.

**Claims**

1. A multi-split system, comprising an outdoor unit, a distribution device, and a plurality of indoor units, wherein
the distribution device comprises a gas-liquid separator, a first heat exchange assembly, a first electronic expansion valve, a second heat exchange assembly, a second electronic expansion valve, a third electronic expansion valve connected in parallel with the second electronic expansion valve, in which the distribution device is configured to acquire a flow rate of a refrigerant passing through the first electronic expansion valve, and when the flow rate of the refrigerant passing through the first electronic expansion valve is greater than a first preset value, the distribution device is configured to acquire an outlet temperature of an indoor heat exchanger of each cooling indoor unit of the plurality of indoor units and a temperature of the refrigerant flowing into the second heat exchange assembly respectively, and to calculate a value of superheat degree according to the outlet temperature of the indoor heat exchanger of each cooling indoor unit and the temperature of the refrigerant flowing into the second heat exchange assembly, and to perform a PI control over the second electronic expansion valve and the third electronic expansion valve according to the value of superheat degree.

2. The multi-split system according to claim 1, wherein when the flow rate of the refrigerant passing through the first electronic expansion valve is less than a second preset value, the distribution device is further configured to acquire a temperature of the refrigerant discharged to the outdoor unit from the first heat exchange assembly, and to calculate the value of superheat degree according to the temperature of the refrigerant flowing into the second heat exchange assembly and the temperature of the refrigerant discharged to the outdoor unit from the first heat exchange assembly, in which the second preset value is less than the first preset value.

3. The multi-split system according to claim 1, wherein the distribution device calculates the value of superheat degree according to following formula:

$$\Delta SH = T2b\ Average - Tm2,$$

in which T2bAverage is an average value of the outlet temperature of the indoor heat exchanger of each cooling indoor unit, and Tm2 is the temperature of the refrigerant flowing into the second heat exchange assembly.

4. The multi-split system according to claim 2, wherein the distribution device calculates the value of superheat degree according to following formula:

$$\Delta SH = Tm3 - Tm2,$$

in which Tm3 is the temperature of the refrigerant discharged to the outdoor unit from the first heat exchange assembly, and Tm2 is the temperature of the refrigerant flowing into the second heat exchange assembly.

5. The multi-split system according to any one of claims 1-4, wherein the multi-split system works under a main cooling mode.

6. The multi-split system according to claim 1, wherein the outlet temperature of the indoor heat exchanger of each cooling indoor unit is detected by a temperature sensor provided at an outlet of the indoor heat exchanger of each cooling indoor unit, and the temperature of the refrigerant flowing into the second heat exchange, assembly is detected by a temperature sensor provided at an outlet of the second electronic expansion valve.

Fig. 1

Fig. 2

Fig. 3

Fig. 4

Fig. 5

first address: 1　second address: 2　third address: 3

outdoor unit

distribution device

first wired controller　second wired controller

third wired controller

fourth address: 4　fifth address: 5

sixth address: 6

fourth wired controller　fifth wired controller

seventh address: 7

sixth wired controller

seventh wired controller

Fig. 6

# INTERNATIONAL SEARCH REPORT

| International application No. |
| --- |
| PCT/CN2015/098289 |

### A. CLASSIFICATION OF SUBJECT MATTER

F24F 3/06 (2006.01) i; F24F 11/02 (2006.01) n; F25B 41/04 (2006.01) n; F25B 49/02 (2006.01) n

According to International Patent Classification (IPC) or to both national classification and IPC

### B. FIELDS SEARCHED

Minimum documentation searched (classification system followed by classification symbols)

F24F; F25B

Documentation searched other than minimum documentation to the extent that such documents are included in the fields searched

Electronic data base consulted during the international search (name of data base and, where practicable, search terms used)

CNABS, CNPAT, CNKI, DWPI, SIPOABS, EPODOC: MULTIPLE, CONNECT+, SUPERHEAT+, SUBCOOL+, DEGREE, COOLANT, REFRIGERANT, FLOW, EXPAN+, THROTTL+, OPEN+, OUTLET, EXIT, MEAN, AVERAGE, TEMPERATURE, PI, PID

### C. DOCUMENTS CONSIDERED TO BE RELEVANT

| Category* | Citation of document, with indication, where appropriate, of the relevant passages | Relevant to claim No. |
| --- | --- | --- |
| PX | CN 104748261 A (GUANGDONG MIDEA HEATING & VENTILATING et al.) 01 July 2015 (01.07.2015) claims 1 to 6 | 1-6 |
| A | CN 203249455 U (MITSUBISHI ELECTRIC CORP.) 23 October 2013 (23.10.2013) description, paragraphs [0038] to [0280], and figures 1 to 11 | 1-6 |
| A | CN 103154637 A (MITSUBISHI ELECTRIC CORP.) 12 June 2013 (12.06.2013) the whole document | 1-6 |
| A | GB 2287783 A (HITACHI LTD.) 27 September 1995 (27.09.1995) the whole document | 1-6 |
| A | JP 2008096051 A (MITSUBISHI JUKOGYO KK) 24 April 2008 (24.04.2008) the whole document | 1-6 |
| A | JP H1183128 A (ZEXEL KK) 26 March 1999 (26.03.1999) the whole document | 1-6 |

☐ Further documents are listed in the continuation of Box C.     ☒ See patent family annex.

| | |
| --- | --- |
| *   Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 03 March 2016 | 29 March 2016 |

| Name and mailing address of the ISA | Authorized officer |
| --- | --- |
| State Intellectual Property Office of the P. R. China No. 6, Xitucheng Road, Jimenqiao Haidian District, Beijing 100088, China Facsimile No. (86-10) 62019451 | XIANG, Changsong Telephone No. (86-10) 62084757 |

Form PCT/ISA /210 (second sheet) (July 2009)

## INTERNATIONAL SEARCH REPORT
### Information on patent family members

International application No.

PCT/CN2015/098289

| Patent Documents referred in the Report | Publication Date | Patent Family | Publication Date |
|---|---|---|---|
| CN 104748261 A | 01 July 2015 | None | |
| CN 203249455 U | 23 October 2013 | US 2015034293 A1 | 05 February 2015 |
| | | EP 2833086 A1 | 04 February 2015 |
| | | WO 201314494 A1 | 03 October 2013 |
| | | EP 2833086 A4 | 02 December 2015 |
| CN 103154637 A | 12 June 2013 | US 2013152613 A1 | 20 June 2013 |
| | | EP 2623887 A1 | 07 August 2013 |
| | | EP 2623887 A4 | 16 April 2014 |
| | | WO 2012042573 A1 | 05 April 2012 |
| | | CN 103154637 B | 25 November 2015 |
| | | JP 5595508 B2 | 24 September 2014 |
| GB 2287783 A | 27 September 1995 | JP 3265803 B2 | 18 March 2002 |
| | | GB 2287783 B | 29 April 1998 |
| | | JPH 07260232 A | 13 October 1995 |
| JP 2008096051 A | 24 April 2008 | JP 5210510 B2 | 12 June 2013 |
| JPH 1183128 A | 26 March 1999 | None | |

Form PCT/ISA/210 (patent family annex) (July 2009)